# EUROPEAN PATENT APPLICATION

(11) **EP 4 378 685 A1**
(43) Date of publication of application: **05.06.2024**
(21) Application number: 22861351.9
(22) Date of filing: 23.08.2022
(51) Int. Cl.: B32B 27/32, B32B 27/00, B65D 30/02, B65D 33/00, B65D 65/40

(54) **LAMINATE FILM, PACKAGING BAG, AND PACKAGING BODY**

(30) Priority: 25.08.2021 JP 2021137184
(71) Applicant: TOPPAN INC., Tokyo 110-0016 (JP)
(72) Inventor: SATO, Masaki, Tokyo 110-0016 (JP); OTSUKA, Hiroyuki, Tokyo 110-0016 (JP); FUKUDA, Yuka, Tokyo 110-0016 (JP)
(74) Representative: TBK
(86) International application number: PCT/JP2022/031702
(87) International publication number: WO 2023/027063

(57) **Abstract**

A laminate film including a base material layer and a sealant layer including a polyolefin resin, the base material layer including a first resin layer that includes a polyolefin resin and a second resin layer that includes a laser beam-absorbing resin, in which the laser beam-absorbing resin absorbs a laser beam used to form a half-cut line, the polyolefin resins included in the sealant layer and the first resin layer do not absorb the laser beam, and a total content percentage occupied by the polyolefin resins in the entirety of the laminate film is 90% by mass or greater.

## Description

### Technical Field

The present disclosure relates to a laminate film, a packaging bag, and a packaged body.

### Background Art

In recent years, there has been an increasing demand for establishing a recycling-oriented society with less environment impact, and thus, attempts have been made to recycle and use packaging materials. For example, the following Patent Literature 1 proposes a polyethylene laminated body for packaging materials, which includes a stretched polyethylene film and a heat-sealable polyethylene layer.

### Citation List

### Patent Literature

Patent Literature 1: Japanese Unexamined Patent Publication No. 2019-166810

### Summary of Invention

### Technical Problem

Meanwhile, with regard to a packaged body in which contents are accommodated in a packaging bag, it is known to form half-cut lines on the surface of the packaging bag in order to facilitate opening of the package.

However, the polyethylene laminated body for packaging materials described in the above-mentioned Patent Literature 1 has a problem that although an attempt is made to form a half-cut line with a laser beam emitted from a carbon dioxide laser on a packaging bag produced by using this polyethylene laminated body, the half-cut line is not satisfactorily formed, and even if a half-cut line were formed, it would be difficult to tear along the half-cut line.

Thus, it is an object of the present disclosure to provide a laminate film that can improve tearability along a half-cut line formed by a laser beam while maintaining satisfactory recyclability, a packaging bag, and a packaged body.

### Solution to Problem

An aspect of the present disclosure is a laminate film including a base material layer and a sealant layer including a polyolefin resin, the base material layer including a first resin layer including a polyolefin resin and a second resin layer including a laser beam-absorbing resin, in which the laser beam-absorbing resin absorbs a laser beam used to form a half-cut line, the polyolefin resins included in the sealant layer and the first resin layer do not absorb the laser beam, and a total content percentage occupied by the polyolefin resins in an entirety of the laminate film is 90% by mass or greater.

According to the laminate film of the present disclosure, since the total content percentage occupied by the polyolefin resin in the entirety of the laminate film is 90% by mass or greater, satisfactory recyclability can be maintained.

In addition, according to the laminate film of the present disclosure, the base material layer includes a first resin layer including a polyolefin resin and a second resin layer including a laser beam-absorbing resin, the laser beam-absorbing resin included in the second resin layer absorbs the laser beam used to form a half-cut line, and the polyolefin resins included in the sealant layer and the first resin layer do not absorb the laser beam. For this reason, when the laminate film is irradiated with a laser beam through the base material layer side in order to form a half-cut line, the laser beam reaches the second resin layer without passing through the sealant layer, and therefore, the laser light is irradiated to the second resin layer almost without being attenuated. As a result, the laser beam-absorbing resin absorbs this laser beam to be effectively burned away, and a half-cut line is effectively formed. Therefore, according to the laminate film of the present disclosure, tearability along a half-cut line formed by a laser beam can be improved while maintaining satisfactory recyclability.

In addition, in a case where a packaging bag is produced by using the laminate film of the present disclosure, the sealant layer is directed inward, and the base material layer including the second resin layer is directed outward. Therefore, according to the laminate film of the present disclosure, even after a packaging bag is produced by using the laminate film, a half-cut line can be easily formed.

In the above-described laminate film, it is preferable that the laser beam-absorbing resin is composed of at least one selected from the group consisting of polyethylene terephthalate, a polyamide, and ethylene vinyl alcohol.

In this case, since it is possible for the laser beam-absorbing resin to effectively absorb the laser beam used to form a half-cut line, tearability along the half-cut line can be further improved.

In the above-described laminate film, it is preferable that the base material layer is obtained by co-extrusion.

In this case, an adhesive layer that can absorb the laser beam used to form a half-cut line is not included in the base material layer, so that the occurrence of interlayer separation in the base material layer can be more sufficiently suppressed, and as a result, tearability along the half-cut line can be further improved.

In the above-described laminate film, it is preferable that in the base material layer, the laser beam-absorbing resin is a polyamide, and the polyolefin resin included in the first resin layer is a linear low-density polyethylene.

In this case, the difference in the viscosity between the first resin layer and the second resin layer becomes small. For this reason, in a case where the base material layer is obtained by co-extrusion, bending of either the first resin layer or the second resin layer in the base material layer is suppressed.

In the above-described laminate film, it is preferable that the base material layer includes the second resin layer and two of the first resin layers that are arranged to have the second resin layer sandwiched therebetween, and the laser beam-absorbing resin is a polyamide.

In a case where the laser beam-absorbing resin is a polyamide, the second resin layer more easily absorbs moisture. According to this laminate film, since the second resin layer is sandwiched between two first resin layers having higher hydrophobicity than the second resin layer in the base material layer, infiltration of moisture into the second resin layer is sufficiently prevented. For this reason, the second resin layer can be suppressed from expanding due to moisture absorption and causing the first resin layer to curve.

In the above-described laminate film, it is preferable that the base material layer includes the second resin layer and two of the first resin layer that are arranged to have the second resin layer sandwiched therebetween, and the laser beam-absorbing resin is polyethylene terephthalate.

In a case where the laser beam-absorbing resin is polyethylene terephthalate, when the laser beam-absorbing resin absorbs a laser beam, dregs may be scattered or smoke may be generated, due to burning away of the laser beam-absorbing resin. According to this laminate film, since the second resin layer is sandwiched between two first resin layers in the base material layer, when the second resin layer absorbs a laser beam, scattering of dregs or generation of smoke caused by burning away of the second resin layer is sufficiently suppressed.

It is preferable that the above-described laminate film further includes a barrier layer between the base material and the sealant layer and has the first resin layer between the barrier layer and the second resin layer.

In this case, since the laminate film has the first resin layer between the barrier layer and the second resin layer, even when the base material layer is irradiated with a laser beam, the influence of heat occurring when the second resin layer is burned away by the laser beam can be sufficiently suppressed from reaching the barrier layer. For this reason, damage to the barrier layer can be suppressed, and deterioration of the barrier properties of the barrier layer can be suppressed.

Another aspect of the present disclosure is a packaging bag formed by using the above-mentioned laminate film, in which the sealant layer is directed inward while the base material layer is directed outward.

According to the packaging bag of the present disclosure, since the total content percentage occupied by the polyolefin resins in the entirety of the laminate film is 90% by mass or greater, satisfactory recyclability can be maintained as a packaging bag.

In addition, according to the packaging bag of the present disclosure, the base material layer in the laminate film includes a first resin layer including a polyolefin resin and a second resin layer including a laser beam-absorbing resin, the laser beam-absorbing resin included in the second resin layer absorbs a laser beam used to form a half-cut line, and the polyolefin resins included in the sealant layer and the first resin layer do not absorb a laser beam. For this reason, when the laminate film is irradiated with a laser beam through the base material layer side of the packaging bag in order to form a half-cut line, the laser beam reaches the second resin layer without passing through the sealant layer, and therefore, the laser beam is irradiated to the second resin layer almost without being attenuated. As a result, the laser beam-absorbing resin absorbs this laser beam and then is effectively burned away, and a half-cut line is effectively formed. Therefore, according to the packaging bag of the present disclosure, tearability along a half-cut line formed by a laser beam can be improved while maintaining satisfactory recyclability. For this reason, the packaging bag can be easily torn along the half-cut line.

In addition, according to the packaging bag of the present disclosure, since the sealant layer is directed inward, and the base material layer including the second resin layer is directed outward, a half-cut line can be easily formed through the base material layer side.

Still another aspect of the present disclosure is a packaged body including the above-mentioned packaging bag and contents accommodated in the packaging bag.

According to the packaged body of the present disclosure, since the total content percentage occupied by the polyolefin resins in the entirety of the laminate film constituting the packaging bag is 90% by mass or greater, satisfactory recyclability can be maintained as a packaging bag.

Furthermore, according to the packaged body of the present disclosure, in the laminate film constituting the packaging bag, the base material layer includes a first resin layer including a polyolefin resin and a second resin layer including a laser beam-absorbing resin layer, the laser beam-absorbing resin included in the second resin layer absorbs the laser beam used to form a half-cut line, and the polyolefin resins included in the sealant layer and the first resin layer do not absorb the laser beam. For this reason, when the laminate film is irradiated with a laser beam through the base material layer side of the packaging bag in order to form a half-cut line, since the laser beam reaches the second resin layer without passing through the sealant layer, the laser beam is irradiated to the second resin layer almost without being attenuated. As a result, the laser beam-absorbing resin absorbs this laser beam and then is effectively burned away, and a half-cut line is effectively formed. Therefore, according to the packaged body of the present disclosure, tearability along a half-cut line formed by a laser beam can be improved while maintaining satisfactory recyclability. For this reason, the packaged body can be easily opened by tearing the packaging bag along the half-cut line, and contents can be easily taken out.

In addition, according to the packaged body of the present disclosure, since the sealant layer is directed inward, and the base material layer including the second resin layer is directed outward in the packaging bag, a half-cut line can be easily formed through the base material layer side.

### Advantageous Effects of Invention

According to the present disclosure, a laminate film that can improve tearability along a half-cut line formed by a laser beam while maintaining satisfactory recyclability, a packaging bag, and a packaged body are provided.

### Brief Description of Drawings

FIG. 1 is a cross-sectional view illustrating an embodiment of a laminate film of the present disclosure.
FIG. 2 is a cross-sectional view illustrating another embodiment of the laminate film of the present disclosure.
FIG. 3 is a front view illustrating an embodiment of a packaged body of the present disclosure.
FIG. 4 is a cross-sectional view taken along line IV-IV in FIG. 3.

### Description of Embodiments

Hereinafter, embodiments of the present disclosure will be described with reference to the drawings depending on the cases. However, the following embodiments are examples for describing the present disclosure and are not intended to limit the present disclosure to the following contents. In the description, the same reference numerals will be used for the same elements or elements having the same function, and duplicate description will not be repeated in some cases. In addition, the dimensional ratios in the drawings are not limited to the ratios shown therein.

### <Laminate film>

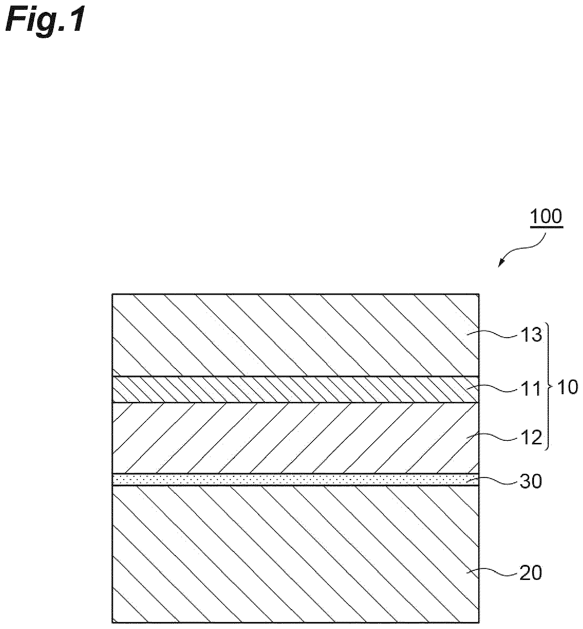

FIG. 1 is a cross-sectional view illustrating an embodiment of a laminate film of the present disclosure. The laminate film 100 includes a base material layer 10, an adhesive layer 30, and a sealant layer 20 including a polyolefin resin, in this order. The base material layer 10 includes, from the adhesive layer 30 side, a first resin layer 12 including a polyolefin resin, a second resin layer 11 including a laser beam-absorbing resin, and a first resin layer 13 including a polyolefin resin, in this order. That is, in the base material layer 10, the first resin layer 12 and the first resin layer 13 are arranged to have the second resin layer 11 sandwiched therebetween.

Here, the second resin layer 11 includes a laser beam-absorbing resin, the laser beam-absorbing resin absorbs a laser beam used to form a half-cut line, and the polyolefin resins included in the sealant layer 20 and the first resin layers 12 and 13 do not absorb the above-described laser beam. In addition, in the laminate film 100, the total content percentage occupied by the polyolefin resins in the entirety of the laminate film 100 is 90% by mass or greater.

According to the laminate film 100, since the total content percentage occupied by the polyolefin resins in the entirety of the laminate film 100 is 90% by mass or greater, satisfactory recyclability can be maintained.

In addition, according to the laminate film 100, the base material layer 10 includes a first resin layer 12 including a polyolefin resin and a second resin layer 11 including a laser beam-absorbing resin, the laser beam-absorbing resin included in the second resin layer 11 absorbs a laser beam used to form a half-cut line, and the polyolefin resins included in the sealant layer 20 and the first resin layers 12 and 13 do not absorb a laser beam. Therefore, when the laminate film 100 is irradiated with a laser beam through the base material layer 10 side in order to form a half-cut line, since the laser beam reaches the second resin layer 11 without passing through the sealant layer 20, the laser beam is irradiated to the second resin layer 11 almost without being attenuated. As a result, the laser beam-absorbing resin absorbs this laser beam and then is effectively burned away, and a half-cut line is effectively formed. Therefore, according to the laminate film 100, tearability along a half-cut line formed by a laser beam can be improved while maintaining satisfactory recyclability.

Furthermore, in a case where a packaging bag is produced by using the laminate film 100, the sealant layer 20 is directed inward, and the base material layer 10 including the second resin layer 11 is directed outward. For this reason, according to the laminate film 100, a half-cut line can be easily formed even after a packaging bag is produced by using the laminate film 100.

The laminate film 100 will be described in detail below.

In the laminate film 100, it is acceptable that the total content percentage occupied by the polyolefin resins in the entirety of the laminate film 100 is 90% by mass or greater; however, from the viewpoint of improving the recyclability of the laminate film 100, the total content percentage is preferably 95% by mass or greater.

However, the total content percentage occupied by the polyolefin resins in the entirety of the laminate film 100 is less than 100% by mass.

### (Base material layer)

The base material layer 10 may be obtained by co-extrusion or may be obtained by sticking the second resin layer 11 and each of the first resin layers 12 and 13 together by a dry lamination method, with an adhesive interposed therebetween; however, a base material layer obtained by co-extrusion is preferred.

In this case, an adhesive layer that can absorb the laser beam used to form a half-cut line is not included in the base material layer 10, the occurrence of interlayer separation in the base material layer 10 can be more sufficiently suppressed, and as a result, tearability along a half-cut line can be further improved.

The thickness of the base material layer 10 is not particularly limited and may be, for example, 10 µm or greater or 50 µm or greater. The thickness of the base material layer 10 may be 100 µm or less or 60 µm or less. The thickness of the base material layer 10 is adjusted as appropriate in accordance with the use application or required characteristics.

### (1) Second resin layer

It is acceptable that the second resin layer 11 includes a laser beam-absorbing resin, and for example, the entirety may be composed of a laser beam-absorbing resin, or only a portion may be composed of a laser beam-absorbing resin.

The laser beam-absorbing resin may be composed of a resin that absorbs the laser beam used to form a half-cut line. Here, the term "absorb" means that the resin is burned away when irradiated with the laser beam (for example, a laser beam having a wavelength of 10600 nm and an output power of 25 W) used to form a half-cut line, and forms a space. In a case where the base material layer 10 is irradiated with a laser beam, and then a half-cut line is formed, when the base material layer 10 can be torn more easily than before being irradiated with a laser beam, it can be said that the laser beam has been absorbed by the laser beam-absorbing resin constituting the second resin layer 11. That is, it can be said that in the second resin layer 11, the laser beam-absorbing resin is burned away along the direction of laser beam irradiation and forms a space.

As the laser beam used to form a half-cut line, specifically, a laser beam emitted from a carbon dioxide laser (oscillation wavelength: 96000 nm or 10600 nm) or a YAG laser (oscillation wavelength: 1064 nm) may be mentioned.

Examples of the laser beam-absorbing resin include polyesters such as polyethylene terephthalate (PET), polyethylene naphthalate (PEN), and polybutylene terephthalate (PBT); polyamides such as nylon (for example, 66-nylon); and ethylene vinyl alcohol (EVOH). The above-described laser beam-absorbing resins may be used singly or in combination of two or more kinds thereof.

The above-described laser beam-absorbing resin may be a resin obtained by using a raw material (monomer) obtained from fossil fuel, or may be a resin obtained by using a raw material (monomer) derived from biomass; however, from the viewpoint of reducing the environmental impact, the laser beam-absorbing resin is preferably a resin obtained by using a raw material derived from biomass. Alternatively, the above-described laser beam-absorbing resin may be a recycled resin. The recycled resin may be a mechanically recycled resin or a chemically recycled resin.

Among the above-described laser beam-absorbing resin, polyethylene terephthalate, a polyamide, ethylene vinyl alcohol, or a mixture of two or more kinds of these is preferred.

In this case, since it is possible for the laser beam-absorbing resin to effectively absorb the laser beam used to form a half-cut line, tearability along the half-cut line can be further improved.

However, in a case where the laser beam-absorbing resin is a polyamide, the second resin layer 11 usually absorbs moisture easily. In contrast, according to the laminate film 100, in the base material layer 10, the second resin layer 11 is sandwiched by two first resin layers 12 and 13 having higher hydrophobicity than the second resin layer 11. For this reason, infiltration of moisture into the second resin layer 11 is sufficiently prevented. For this reason, the second resin layer 11 can be suppressed from expanding due to moisture absorption and causing the first resin layers 12 and 13 to curve.

Furthermore, in a case where the laser beam-absorbing resin is polyethylene terephthalate, when the laser beam-absorbing resin absorbs a laser beam, dregs may be scattered or smoke may be generated, due to burning away of the laser beam-absorbing resin. In contrast, according to the laminate film 100, since the second resin layer 11 is sandwiched between two first resin layers 12 and 13 in the base material layer 10, when the second resin layer 11 absorbs a laser beam, scattering of dregs or generation of smoke caused by burning away of the second resin layer 11 is sufficiently suppressed.

The second resin layer 11 may contain at least one additive selected from a filler, an antistatic agent, a plasticizer, a lubricating agent, and an oxidation inhibitor.

The second resin layer 11 may be formed by laminating a plurality of layers of the same kind. The second resin layer 11 may be composed of either a stretched film or an unstretched film. A product obtained by laminating at least one stretched film and at least one unstretched film may also be used. The second resin layer 11 can improve mechanical strength and dimensional stability by having a film that has been arbitrarily stretched in biaxial directions.

The thickness of the second resin layer 11 is not particularly limited and may be, for example, 1 to 40 µm; however, the thickness is preferably 5 to 30 µm. In this case, the recycling suitability can be improved while maintaining sufficient easy cutting properties.

### (2) First resin layer

The first resin layers 12 and 13 include a polyolefin resin. Examples of the polyolefin resin include polyethylene such as a low-density polyethylene (LDPE), a medium-density polyethylene (MDPE), a high-density polyethylene (HDPE), and a linear low-density polyethylene (LLDPE); polypropylene; an ethylene-vinyl acetate copolymer, an ionomer resin, an ethylene-acrylic acid copolymer, an ethylene-methyl acrylate copolymer, an ethylene-methacrylic acid copolymer, and an ethylene-propylene copolymer. The above-described polyolefin resins may be used singly or in combination of two or more kinds thereof.

Incidentally, the densities of LDPE and LLDPE are usually 0.900 to 0.930 g/cm³, and the density of HDPE is usually greater than 0.930 g/cm³ and 0.980 g/cm³ or less.

The polyolefin resin may be a resin obtained by using a raw material (monomer) obtained from fossil fuel or may be a resin obtained by using a raw material (monomer) derived from biomass; however, from the viewpoint of reducing the environmental impact, it is preferable that the polyolefin resin is a resin obtained by using a raw material derived from biomass. Alternatively, the polyolefin resin may be a recycled resin. The recycled resin may be a mechanically recycled resin or a chemically recycled resin.

In a case where the laser beam-absorbing resin is a polyamide, and polyethylene is used as the polyolefin resin included in the first resin layers 12 and 13, and in a case where the base material layer 10 is obtained by co-extrusion, it is preferable that the polyethylene is an LLDPE. In this case, the difference in viscosity between the first resin layers 12 and 13 and the second resin layer 11 becomes smaller, and in the base material layer 10 obtained by co-extrusion, curving of the layer of either the first resin layers 12 and 13 or the second resin layer 11 is suppressed.

The first resin layers 12 and 13 may be each formed by laminating a plurality of layers of the same kind. The first resin layers 12 and 13 may be each composed of either a stretched film or an unstretched film. A product obtained by laminating at least one stretched film and at least one unstretched film may also be used. The first resin layers 12 and 13 can improve mechanical strength and dimensional stability by having a film that has been arbitrarily stretched in biaxial directions.

The first resin layers 12 and 13 may be composed of polyolefin resins that are identical with each other, or may be composed of different polyolefin resins.

The first resin layers 12 and 13 may contain at least one additive selected from a filler, an antistatic agent, a plasticizer, a lubricating agent, an oxidation inhibitor, and the like.

The thickness of the first resin layers 12 and 13 is not particularly limited and may be, for example, 10 to 60 µm; however, the thickness is preferably 10 to 30 µm. In this case, recycling suitability can be improved.

The thickness of the first resin layer 12 and the thickness of the first resin layer 13 may be identical with or different from each other; however, from the viewpoint of suppressing warpage of the laminate film 100, it is preferable that the thickness of the first resin layer 13 is identical with the thickness of the first resin layer 12.

### (Adhesive layer)

The adhesive layer 30 is a layer having a function of adhering the base material layer 10 and the sealant layer 20. As the laminate film 100 has the adhesive layer 30, the close adhesion between the base material layer 10 and the sealant layer 20 can be further increased, and separation between the base material layer 10 and the sealant layer 20 can be more sufficiently suppressed.

The adhesive layer 30 is composed of, for example, a polyolefin-based resin. Specific examples of such a polyolefin-based resin include a high-density polyethylene resin (HDPE), a medium-density polyethylene resin (MDPE), an LDPE, an LLDPE, an ethylene-methacrylic acid copolymer (EMAA), an ethylene-acrylic acid copolymer (EAA), an ionomer, polypropylene (PP), an acid-modified polyethylene, and an acid-modified polypropylene. In a case where the polyolefin-based resin includes a resin other than a polyethylene resin, it is desirable that the amount of this resin is suppressed to be within 10% by weight with respect to the entirety of the polyolefin-based resin. In order to increase the adhesive strength, the surface of the base material layer 10 or the sealant layer 20 may be subjected to a corona treatment, an ozone treatment, an anchor coating, or the like. The thickness of the adhesive layer 30 is not particularly limited and is preferably 2 µm or greater and 50 µm or less. When the thickness of the adhesive layer 30 is set to 2 µm or greater, sufficient adhesive strength can be obtained.

Instead of a layer composed of a polyolefin-based resin, the adhesive layer 30 may also be an adhesive layer using an adhesive composition containing a dry lamination adhesive or the like.

Examples of the dry lamination adhesive include known adhesives such as a urethane-based adhesive, a polyester-based adhesive, a polyamide-based adhesive, an epoxy-based adhesive, and an isocyanate-based adhesive. Among these, a urethane-based adhesive is preferred. In this case, it is possible to adhere the layers effectively at low temperatures, the adhesive can be easily designed because raw materials are abundant, and adhesion to various adherents such as plastics and metals can be easily achieved.

In addition, the adhesive layer 30 may or may not include a biomass component; however, from the viewpoint of reducing the environmental impact, it is preferable that the adhesive layer 30 includes a biomass component. Specific examples of the biomass component include "DICDRY BM series" manufactured by DIC Corporation, and "ECOAD series" manufactured by TOYO INK CO., LTD. Incidentally, the biomass component may be included as a polyolefin-based resin or a component other than a polyolefin-based resin, or as an adhesive or a component other than an adhesive. Alternatively, the biomass component may be included as a polyolefin-based resin and a component other than a polyolefin-based resin, or as an adhesive and a component other than an adhesive.

The adhesive composition may be an adhesive composition that further includes an organic solvent, or an adhesive composition that does not include an organic solvent; however, from the viewpoint of reducing the environmental impact, it is preferable that the adhesive composition is an adhesive composition that does not include an organic solvent (a solvent-free type adhesive composition).

The thickness of the adhesive layer 30 is not particularly limited; however, from the viewpoint of suppressing the laminate film 100 from becoming excessively thick while suppressing separation between the base material layer 10 and the sealant layer 20, the thickness is preferably 1 to 20 µm, and more preferably 2 to 15 µm.

### (Sealant layer)

The sealant layer 20 includes a polyolefin resin. Examples of such a polyolefin resin include polyethylene such as a low-density polyethylene (LDPE), a medium-density polyethylene (MDPE), a high-density polyethylene (HDPE), and a linear low-density polyethylene (LLDPE); polypropylene; an ethylene-vinyl acetate copolymer, an ionomer resin, an ethylene-acrylic acid copolymer, an ethylene-methyl acrylate copolymer, an ethylene-methacrylic acid copolymer, and an ethylene-propylene copolymer. These may be used singly or in combination of two or more kinds thereof. However, in a case where polyethylene is used as the polyolefin resin included in the first resin layers 12 and 13 of the base material layer 10, from the viewpoint of improving recyclability, it is preferable the polyolefin resin included in the sealant layer 20 is also polyethylene.

In a case where polyethylene is used as the polyolefin resin included in the sealant layer 20, the density of the polyethylene is preferably 0.890 to 0.930 g/cm³.

The polyolefin resin may be a resin obtained by using a raw material (monomer) obtained from fossil fuel or may be a resin obtained by using a raw material (monomer) derived from biomass; however, from the viewpoint of reducing the environmental impact, it is preferable that the polyolefin resin is a resin obtained by using a raw material derived from biomass. Alternatively, the polyolefin resin may be a recycled resin. The recycled resin may be a mechanically recycled resin or a chemically recycled resin.

From the viewpoint of suppressing melting of the first resin layers 12 and 13 in the base material layer 10 at the time of heat-sealing of the laminate film 100, it is preferable that the melting point of the polyolefin resin included in the sealant layer 20 is lower than the melting point of the polyolefin resin included in the first resin layers 12 and 13. For example, in a case where an LLDPE is used as the polyolefin resin included in the first resin layers 12 and 13 in the base material layer 10, an LDPE having a lower melting point than an LLDPE is used as the polyolefin resin included in the sealant layer 20.

The sealant layer 20 can be formed by, for example, sticking a sheet including a polyolefin resin to the adhesive layer 30.

The thickness of the sealant layer 20 is not particularly limited and may be, for example, 20 µm or greater or may be 50 µm or greater. The thickness of the sealant layer 20 may be 150 µm or less or may be 60 µm or less.

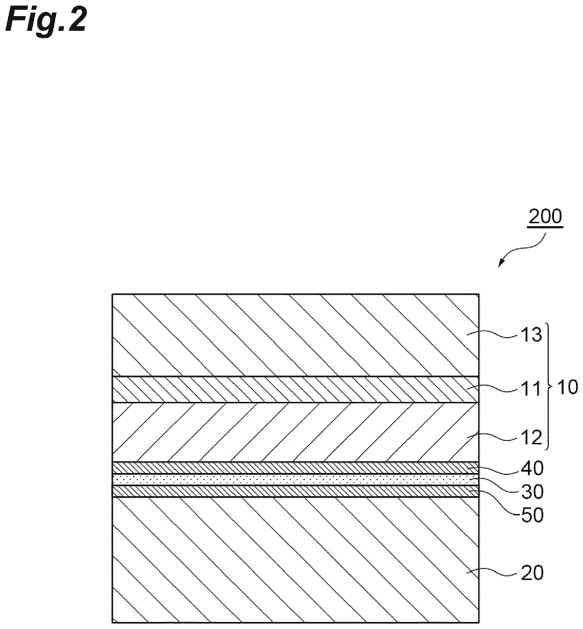

FIG. 2 is a cross-sectional view illustrating another embodiment of the laminate film of the present disclosure. As shown in FIG. 2, the laminate film 200 is different from the laminate film 100 in that the laminate film 200 further includes a barrier layer 40 between the adhesive layer 30 and the base material layer 10, and further includes a print layer 50 between the adhesive layer 30 and the sealant layer 20.

Since the laminate film 200 has the first resin layer 12 between the barrier layer 40 and the second resin layer 11, even when the base material layer 10 is irradiated with a laser beam, the influence of heat occurring when the second resin layer 11 is burned away by the laser beam can be sufficiently suppressed from reaching the barrier layer 40. For this reason, damage to the barrier layer 40 can be suppressed, and deterioration of the barrier properties of the barrier layer 40 can be suppressed. Therefore, in a case where a packaging bag is produced by using the laminate film 200, the laminate film 200 can sufficiently suppress infiltration of oxygen, water vapor, and the like into the packaging bag. As a result, deterioration of the contents accommodated in the packaging bag can be suppressed.

Similarly, since the laminate film 200 has the first resin layer 12 between the print layer 50 and the second resin layer 11, even when the base material layer 10 is irradiated with a laser beam, the laser beam can be sufficiently suppressed from reaching the print layer 50. For this reason, damage to the print layer 50 can be suppressed.

The barrier layer 40 is a layer having barrier properties against gases such as oxygen and water vapor. Examples of the barrier layer 40 include vapor-deposited film formed of an inorganic substance, a metal foil, a resin film, and a product obtained by laminating a vapor-deposited layer on a resin film. Specific examples include an inorganic vapor-deposited film of silica or the like, an aluminum vapor-deposited film, an aluminum foil, an aluminum foil-laminated PET film, and various barrier films such as a nylon-based barrier film and an ethylene vinyl alcohol-based barrier film. The barrier layer 40 may have one kind of these alone or a combination of two or more kinds thereof.

The thickness of the barrier layer 40 is not particularly limited. In a case where the barrier layer 40 is composed of, for example, a vapor-deposited layer, the thickness thereof is, for example, 5 to 100 nm. In a case where the barrier layer 40 is composed of, for example, an aluminum foil, the thickness thereof is, for example, 3 to 20 µm. Thus, the thickness is adjusted as appropriate in accordance with the material of the barrier layer 40 and the use application of the laminate film 200. The barrier layer 40 can be formed by, for example, a vacuum evaporation method, a sputtering method, an ion plating method, a plasma vapor deposition method (CVD), a dry lamination method, or an extrusion lamination method.

The print layer 50 is a layer formed by using, for example, an ink obtained by adding various pigments, a plasticizer, a desiccant, a stabilizer, and the like to a urethane-based, acrylic-based, nitrocellulose-based, or rubber-based binder resin. Characters, patterns, and the like can be displayed by this print layer.

The ink may be an aqueous ink or an oily ink; however, the ink is preferably an aqueous ink. Since an aqueous ink uses water or an alcohol as a solvent, the environmental impact can be further reduced. Particularly, in a case where the adhesive composition is a solvent-free type adhesive composition, when an aqueous ink is used as the ink, the environmental impact can be significantly reduced. In addition, the ink may be a biomass ink or does not have to be a biomass ink; however, from the viewpoint of reducing the environmental impact, the ink is preferably a biomass ink. Here, the biomass ink refers to an ink including components obtained from biologically derived resources (biomass) such as cotton, pulp, rice bran, vegetable oil, and angiosperm seeds.

As the printing method, for example, known printing methods such as offset printing, gravure printing, flexographic printing, silk screen printing, and inkjet printing can be used. In addition, the close adhesiveness of the print layer 50 to the sealant layer 20 can be improved by subjecting the surface of the sealant layer 20 to a corona treatment or an ozone treatment as a pretreatment.

### <Packaged body>

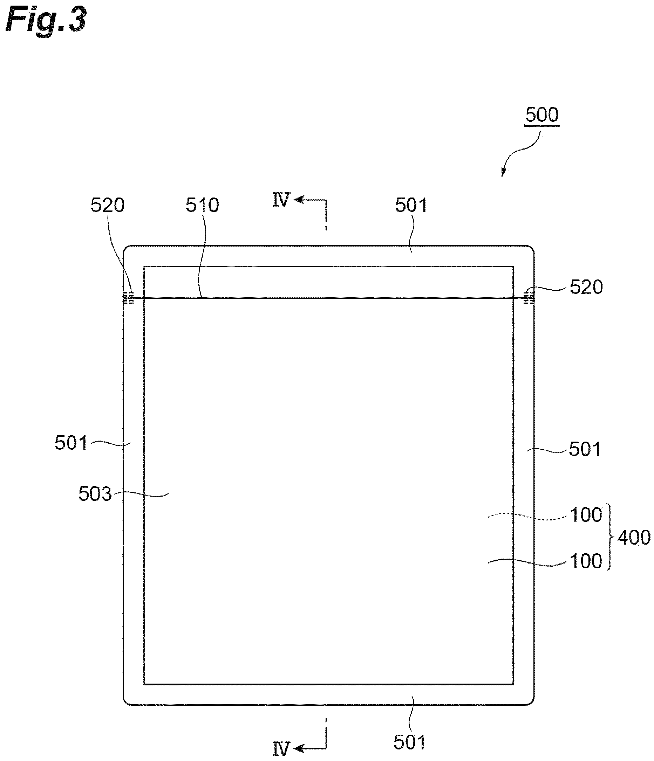

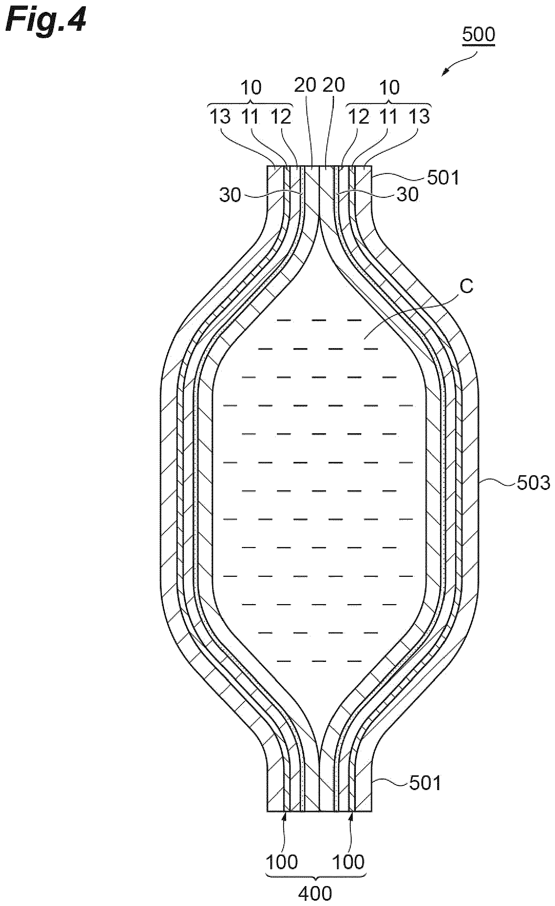

Next, an embodiment of a packaged body of the present disclosure will be described with reference to FIG. 3 and FIG. 4. FIG. 3 is a front view illustrating an embodiment of the packaged body of the present embodiment, and FIG. 4 is a cross-sectional view taken along line IV-IV in FIG. 3.

As shown in FIG. 3 and FIG. 4, the packaged body 500 includes a packaging bag 400 and contents C accommodated in the packaging bag 400. The packaging bag 400 is formed by using a pair of the laminate films 100. Here, the sealant layer 20 of the laminate film 100 is directed inward, and the base material layer 10 is directed outward. The packaging bag 400 is composed of an accommodation part 503 accommodating the contents C, and an adhered part 501 provided around the accommodation part 503. The adhered part 501 is a portion formed by adhering the sealant layers 20 of the laminate films 100 facing each other, and the accommodation part 503 is a portion where the sealant layers 20 of the laminate films 100 facing each other are not adhered.

According to the packaged body 500, since the total content percentage occupied by polyolefin resins in the entirety of the laminate film 100 constituting the packaging bag 400 is 90% by mass or greater, satisfactory recyclability can be maintained as a packaged body 500.

In addition, according to the packaged body 500, in the laminate film 100 constituting the packaging bag 400, the base material layer 10 includes first resin layers 12 and 13 including a polyolefin resin, and a second resin layer 11 including a laser beam-absorbing resin, the laser beam-absorbing resin included in the second resin layer 11 absorbs a laser beam used to form a half-cut line, and the polyolefin resin included in the sealant layer 20 and the first resin layers 12 and 13 does not absorb a laser beam. For this reason, when the laminate film 100 is irradiated with a laser beam through the base material layer 10 side of the packaging bag 400 in order to form a half-cut line, since the laser beam reaches the second resin layer 11 without passing through the sealant layer 20, the laser beam is irradiated to the second resin layer 11 almost without being attenuated. As a result, the laser beam-absorbing resin absorbs this laser beam and then is effectively burned away, and a half-cut line 510 is effectively formed. Therefore, according to the packaged body 500, after a half-cut line 510 is formed with a laser beam (for example, a laser beam consisting of infrared radiation having a specific wavelength), tearability along the half-cut line 510 can be improved, while maintaining satisfactory recyclability. For this reason, the packaged body 500 can be easily opened by tearing the packaging bag 400 along the half-cut line 510, and the contents C can be easily taken out.

Furthermore, according to the packaged body 500, since the sealant layer 20 is directed inward while the base material layer 10 including the second resin layer 11 is directed outward in the packaging bag 400, a half-cut line 510 can be easily formed through the base material layer 10 side.

### (Contents)

The contents C are not particularly limited and may be selected as appropriate in accordance with the use applications of the packaging bag 400. Examples of the contents C include foods; toiletry products such as shampoos, detergents, and bath additives; and cosmetics.

### (Packaging bag)

It is not essential that the pair of laminate films 100 constituting the packaging bag 400 have the same layer configuration, and the laminate films 100 may have different layer configurations.

The packaging bag 400 may include an easy-to-open processed part 520 at both ends or at one end of the half-cut line 510 (see FIG. 3). Examples of the easy-to-open processed part 520 include a group of scars and V-shaped, U-shaped, or I-shaped notches.

In the adhered part 501 of the packaging bag 400, the sealant layers 20 of the pair of laminate films 100 may be directly adhered to each other by thermal fusion bonding (see FIG. 3) or may be adhered to each other by means of an adhesive.

### (Method for producing packaged body)

Next, a method for producing the packaged body 500 by using the laminate film 100 will be described.

First, a pair of the laminate films 100 are prepared. Then, a laminated body is prepared by arranging the sealant layers 20 of the pair of laminate films 100 to face each other, and the sealant layers 20 are adhered to each other. At this time, a portion of the peripheral edges of the laminated body is adhered in a U-shape to form the adhered part 501, and at the same time, a portion that is not adhered (unadhered part) is formed. In this way, a packaging bag having an unadhered part is obtained.

Next, contents C are filled in the packaging bag having an unadhered part through the unadhered part. Thereafter, the sealant layers 20 of the laminate films 100 are adhered to each other at the unadhered part to convert the unadhered part to the adhered part 501. In this way, a packaged body 500 including the packaging bag 400 and contents C accommodated therein can be produced.

Thus, suitable embodiments of the present disclosure have been described above; however, the present disclosure is not intended to be limited to the above-described embodiments. For example, in the above-described embodiments, the base material layer 10 includes the first resin layer 12, the second resin layer 11, and the first resin layer 13 in this order from the adhesive layer 30 side; however, the first resin layer 12 or the first resin layer 13 may be omitted.

In addition, in the above-described embodiments, the laminate films 100 and 200 include the adhesive layer 30; however, it is also possible to omit the adhesive layer 30 and to directly adhere the base material layer 10 to the sealant layer 20.

Furthermore, in the above-described embodiment, the laminate film 200 includes the print layer 50; however, the print layer 50 may be omitted or may be provided between the barrier layer 40 and the adhesive layer 30, or between the barrier layer 40 and the base material layer 10. In addition, the positions of the print layer 50 and the barrier layer 40 may be switched with each other.

In the above-described embodiment, the laminate film 200 includes the barrier layer 40; however, the print layer 50 may be provided in place of the barrier layer 40. In a case where the base material layer 10 is formed by laminating the second resin layer 11, the first resin layer 13, and the first resin layer 12 in this order, the barrier layer 40 may be provided between the first resin layer 13 and the second resin layer 11, or between the first resin layer 12 and the second resin layer 11.

In the above-described embodiment, the shape of the packaging bag 400 is not limited to the four-sided bag shown in FIG. 3 and may be a standing pouch-shaped packaging bag, a two-sided bag, a three-sided bag, a folded bag, or a gusset bag. The packaging bag 400 may include a spout, or a fastener made of a synthetic resin, which is capable of repeated sealing by fitting of a band-shaped protrusion and a band-shaped groove.

Furthermore, in the above-described embodiment, the packaging bag 400 is formed by using a pair of the laminate films 100; however, the laminate film 200 may be used in place of the laminate film 100. A packaging bag may also be produced by folding one sheet of the laminate film 100 or 200 with the sealant layer 20 placed inside, and adhering the overlapping peripheral edges to each other.

### Examples

The subject matters of the present disclosure will be described in more detail with reference to Examples and Comparative Examples; however, the present disclosure is not intended to be limited to the following Examples.

### (Example 1)

A co-extruded laminated body film (manufactured by TAMAPOLY CO., LTD., trade name: ZPB102) including a first resin layer formed of a high-density polyethylene with a thickness of 15 µm, a second resin layer formed of nylon with a thickness of 10 µm, and a first resin layer formed of a high-density polyethylene with a thickness of 15 µm, was prepared as a base material layer.

Then, a laminate film was fabricated by applying a urethane-based adhesive (manufactured by Mitsui Chemicals, Inc., trade name: A626/A50) on the first resin layer of the base material layer by using a dry lamination machine, and sticking a sealant layer formed of an LLDPE (density: 0.91 to 0.92 g/cm³) with a thickness of 100 µm. In this way, a laminate film having the laminate structure shown in FIG. 1 was fabricated. In the laminate film thus fabricated, the total content percentage of the high-density polyethylene and LLDPE, which are polyolefin resins, was 92% by mass.

### (Comparative Example 1)

A laminate film was fabricated in the same manner as in Example 1, except that the base material layer was changed to an HDPE layer, which was a film formed of a high-density polyethylene with a thickness of 30 µm (density: 0.945 to 0.955 g/cm³, manufactured by TAMAPOLY CO., LTD., trade name: HS31), and the second resin layer was not provided inside the base material layer.

### <Evaluation of tearability>

Five sheets each of the laminate films of Example 1 and Comparative Example 1 were prepared, and each of the five sheets of the laminate film was irradiated with a laser beam by using a carbon dioxide laser (oscillation wavelength: 10600 nm, output power: 25 W) through the base material layer side of the laminate film along the MD direction (direction of co-extrusion of the base material layer) and the TD direction at a scan speed of 1000 mm/min.

The laminate film was torn along each of the MD direction and the TD direction, and the tear strength was measured according to JIS K 7128. The results are shown in Table 1.

**[Table 1]**

| | | | Example 1 | Comparative Example 1 |
|---|---|---|---|---|
| Presence or absence of second resin layer | | | Present | Absent |
| Tear strength (N) | MD direction | n1 | 3.4 | Unmeasurable |
| | | n2 | 3.6 | |
| | | n3 | 2.8 | |
| | | n4 | 3.1 | |
| | | n5 | 3.5 | |
| | | Average value | 3.3 | |
| | TD direction | n1 | 6.5 | |
| | | n2 | 6.0 | |
| | | n3 | 6.3 | |
| | | n4 | 5.9 | |
| | | n5 | 5.5 | |
| | | Average value | 6.0 | |

As shown in Table 1, in the laminate film of Example 1, half-cut lines were formed along the MD direction and the TD direction, and even when tearing was performed, the average values of tear strengths n1 to n5 were 3.3 N (average value) in the MD direction and 6.0 N (average value) in the TD direction. On the other hand, in the laminate film of Comparative Example 1, although attempts were made to perform tearing along the sites that had been irradiated with a laser beam, the sealant layer and the HDPE layer stretched, tearing could not be performed, and the tear strength could not be measured.

From the above description, it was verified that according to the laminate film of the present disclosure, tearability along a half-cut line formed by a laser beam can be improved while maintaining satisfactory recyclability.

### Reference Signs List

100, 200: laminate film, 10: base material layer, 11: second resin layer, 12, 13: first resin layer, 20: sealant layer, 30: adhesive layer, 40: barrier layer, 50: print layer, 400: packaging bag, 500: packaged body, 510: half-cut line, C: contents.

## Claims

1. A laminate film comprising:
a base material layer; and
a sealant layer including a polyolefin resin,
the base material layer including a first resin layer including a polyolefin resin and a second resin layer including a laser beam-absorbing resin,
wherein the laser beam-absorbing resin absorbs a laser beam used to form a half-cut line, the polyolefin resins included in the sealant layer and the first resin layer do not absorb the laser beam, and a total content percentage occupied by the polyolefin resins in an entirety of the laminate film is 90% by mass or greater.

2. The laminate film according to claim 1, wherein the laser beam-absorbing resin is composed of at least one selected from the group consisting of polyethylene terephthalate, a polyamide, and ethylene vinyl alcohol.

3. The laminate film according to claim 1 or 2, wherein the base material layer is obtained by co-extrusion.

4. The laminate film according to claim 3, wherein in the base material layer, the laser beam-absorbing resin is a polyamide, and
the polyolefin resin included in the first resin layer is a linear low-density polyethylene.

5. The laminate film according to any one of claims 1 to 4,
wherein the base material layer includes the second resin layer and two of the first resin layers arranged to have the second resin layer sandwiched therebetween, and
the laser beam-absorbing resin is a polyamide.

6. The laminate film according to any one of claims 1 to 4,
wherein the base material layer includes the second resin layer and two of the first resin layers arranged to have the second resin layer sandwiched therebetween, and
the laser beam-absorbing resin is polyethylene terephthalate.

7. The laminate film according to any one of claims 1 to 6,
further comprising a barrier layer between the base material layer and the sealant layer,
wherein the laminate film has the first resin layer between the barrier layer and the second resin layer.

8. A packaging bag formed by using the laminate film according to any one of claims 1 to 7,
wherein the sealant layer is directed inward, and the base material layer is directed outward.

9. A packaged body comprising:
the packaging bag according to claim 8; and
contents accommodated in the packaging bag.
